Europäisches Patentamt

European Patent Office

Office européen des brevets

(19)

(11) **EP 1 195 016 B1**

(12) **EUROPÄISCHE PATENTSCHRIFT**

(45) Veröffentlichungstag und Bekanntmachung des Hinweises auf die Patenterteilung:
**07.07.2004  Patentblatt 2004/28**

(21) Anmeldenummer: **00954317.4**

(22) Anmeldetag: **11.07.2000**

(51) Int Cl.⁷: $H04B\ 1/707$, $H04L\ 25/02$

(86) Internationale Anmeldenummer:
**PCT/DE2000/002259**

(87) Internationale Veröffentlichungsnummer:
**WO 2001/006670 (25.01.2001 Gazette 2001/04)**

(54) **VERFAHREN ZUR SCHÄTZUNG DER KANALIMPULSANTWORT EINES MOBILFUNKKANALS**

METHOD FOR ESTIMATING THE CHANNEL IMPULSE RESPONSE OF A MOBILE RADIO CHANNEL

PROCEDE D'ESTIMATION DE LA REPONSE IMPULSIONNELLE DE CANAL D'UN CANAL RADIOMOBILE

(84) Benannte Vertragsstaaten:
**AT BE CH CY DE DK ES FI FR GB GR IE IT LI LU MC NL PT SE**

(30) Priorität: **15.07.1999  DE 19933271**

(43) Veröffentlichungstag der Anmeldung:
**10.04.2002  Patentblatt 2002/15**

(73) Patentinhaber: **Infineon Technologies AG**
**81669 München (DE)**

(72) Erfinder:
• **DOETSCH, Markus**
  **D-81539 München (DE)**
• **JUNG, Peter**
  **D-67697 Otterberg (DE)**
• **PLECHINGER, Jörg**
  **D-80469 München (DE)**
• **SCHMIDT, Peter**
  **D-67167 Erpolzheim (DE)**
• **SCHNEIDER, Michael**
  **D-81541 München (DE)**
• **KELLA, Tideya**
  **D-80337 München (DE)**

(74) Vertreter: **Lange, Thomas, Dr. et al**
**Patentanwälte**
**Lambsdorff & Lange**
**Dingolfinger Strasse 6**
**81673 München (DE)**

(56) Entgegenhaltungen:
**EP-A- 0 704 987      EP-A- 0 749 215**
**EP-A- 0 876 002      US-A- 5 764 687**

• **FRANCHI A ET AL: "MAXIMUM LIKELIHOOD MULTIPATH CHANNEL ESTIMATION FOR SYNCHRONOUS-CDM SYSTEMS" IEEE GLOBECOM, 28. November 1994 (1994-11-28), Seiten 88-92, XP000488524 New York, USA ISBN: 0-7803-1821-8**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Schätzung der Kanalimpulsantwort eines Mobilfunkkanals nach dem Oberbegriff von Patentanspruch 1.

Um bei Mobilfunksystemen eine gute Übertragungsqualität zu erreichen, ist die Kenntnis der Kanalimpulsantwort eines Mobilfunkkanals von besonderer Bedeutung: Erst dadurch kann ein über den Mobilfunkkanal übertragenes Signal in einem Empfänger für eine anschließende Auswertung ausreichend entzerrt werden. Je genauer dabei die Kanalimpulsantwort des Mobilfunkkanals dem Empfänger bekannt ist, desto besser kann ein empfangenes Signal entzerrt und ausgewertet werden.

Zur Schätzung der Kanalimpulsantwort wird beispielsweise bei schmalbandigen Systemen wie GSM (Global System for Mobilcommunications) und Qualcomm CDMA (Code Division Multiple Access) nach dem IS-95-Standard das Maximum-Likelihood Verfahren eingesetzt. Das Maximum-Likelihood Verfahren eignet sich insbesondere für schmalbandigen Systeme mit wenigen Nutzern pro Frequenzresource.

Beispielsweise wird bei GSM-Systemen ein schmalbandiger Frequenzschlitz von 200 kHz zu einem bestimmten Zeitpunkt immer nur von einem Nutzer genutzt. Innerhalb dieses einem Nutzer zur Verfügung stehenden Zeitschlitzes wird von einer Basisstation ein Testsignal übertragen, das dem Mobilfunkempfänger des Nutzers bekannt ist. An Hand dieses Testsignals führt der Mobilfunkempfänger eine Schätzung der Kanalimpulsantwort des Mobilfunkkanals nach dem Maximum-Likelihood-Verfahren durch. Diese Schätzung liefert sowohl die Verzögerungsparameter als auch die Gewichtsfaktoren des Mobilfunkkanals, die zu einer effizienten Entzerrung notwendig sind.

Bei Qualcomm CDMA-Systemen nach dem IS-95-Standard können bis zu 63 Nutzer in einem Frequenzband von 1,25 MHz gleichzeitig senden und empfangen. Durchschnittlich senden und empfangen in einem solchen System gleichzeitig 20 bis 25 Nutzer. Die Schätzung der Kanalimpulsantwort des Mobilfunkkanals erfolgt dabei über einen eigenen Pilotkanal, der aus einer ihn kennzeichnenden "pseudo random binary sequence" mit einer Chiprate von 1,2288 Mchip/s besteht und keine Kanalkodierung besitzt.

Bei Mobilfunksystemen mit einer größeren zur Übertragung zur Verfügung stehenden Bandbreite - insbesondere CDMA Mobilfunksystemen - erhöht sich jedoch die Anzahl der notwendigen Abtastwerte in einem festgelegten Zeitrahmen für eine Dekodierung in einem Mobilfunkempfänger, so daß der Berechnungsaufwand für ein auf dem Maximum-Likelihood verfahren basierendes Dekodierungsverfahren stark zunimmt.

Bei breitbandigen Mobilfunksystemen wie beispielsweise W-CDMA (Wideband CDMA) ist zudem die Anzahl der gleichzeitig sendenden und empfangenden Nutzer höher als bei schmalbandigen Systemen. W-CDMA läßt in einem 5 MHz Frequenzband theoretisch mehr als 250 Nutzer zu. Dadurch erhöht sich nochmals der Berechnungsaufwand für ein Maximum-Likelihood Verfahren.

In der den nächstliegenden Stand der Technik darstellenden europäischen Patentanmeldung EP 0 876 002 ist ein Verfahren zur Kanalschätzung beschrieben, in welchem die Verzögerungsparameter anhand von Pilotsequenzen geschätzt werden und die RAKE-Finger entsprechend den so ermittelten Verzögerungszeiten eingestellt werden. Hinsichtlich der Bestimmung der Kanal- oder Gewichtsparameter ist der Schrift zu entnehmen, dass diese aus den Pilotsymbolen berechnet werden.

In der europäischen Patentanmeldung EP 0 704 987 A2 ist ein Verfahren beschrieben, mit welchem in einem Empfänger durch Auswerten einer über einen Synchronisationskanal übertragenen Synchronisationssequenz der vorgegebene PN-offset einer Basisstation und damit die Zeitdifferenz zwischen Systemzeit und Zeitpunkt der Aussendung des Pilotsignals durch die Basisstation bestimmt wird.

Der Erfindung liegt die Aufgabe zugrunde, ein Verfahren zur Schätzung der Kanalimpulsantwort eines Mobilfunkkanals anzugeben, wobei der Rechenbedarf des Verfahrens geringer als der Berechnungsaufwand eines Maximum-Likelihood Verfahrens ist. Weiterhin soll die zu erreichende Übertragungsqualität durch den Aufwand des Verfahrens bestimmbar sein.

Die Aufgabe wird durch ein Verfahren mit den Merkmalen des Patentanspruchs 1 gelöst. Bevorzugte Ausgestaltungen der Erfindung sind Gegenstand der abhängigen Patentansprüche.

Das erfindungsgemäße Verfahren zur Schätzung der Kanalimpulsantwort eines Mobilfunkkanals, auf den breitbandig mittels dem Codemultiplex-Verfahren zugegriffen wird, wobei über einen zweiten Mobilfunkkanal, der ein Synchronisationskanal ist, fortlaufend Sequenzen zur Synchronisation von Mobilfunkempfängern an eine Vielzahl derselben übertragen werden, und wobei diese Sequenzen jedem der Vielzahl von Mobilfunkempfängern bekannt sind, weist die folgenden Schritte auf:

a) Schätzen der durch Mehrwegeausbreitung bewirkten Verzögerungsparameter des Mobilfunkkanals,

b) Einstellen des Mobilfunkempfängers entsprechend der in Schritt a) geschätzten Verzögerungsparameter, und

c) Schätzen der Gewichtsfaktoren des Mobilfunkkanals mittels Pilot-Sequenzen. Dabei arbeiten die Mobilfunkempfänger nach einem W-CDMA Standard und es werden in Schritt a) die Verzögerungsparameter des Mobilfunkkanals an Hand der über den Synchronisationskanal übertragenen Sequenzen geschätzt.

Dieses mehrstufige Verfahren weist als wesentliche Schritte das Schätzen der Verzögerungsparameter des Mobilfunkanals und anschließend das Schätzen der Gewichtsfaktoren des Mobilfunkanals auf. Die zweistufige Schätzung der Mobilfunkanalparameter benötigt dabei einen geringeren Rechenaufwand als beispielsweise das Maximum-Likelihood Verfahren. Weiterhin kann durch die zweistufige Schätzung der Rechenaufwand für das Schätzen der Gewichtsfaktoren des Mobilfunkanals entsprechend der zu erzielenden Übertragungsqualität angepaßt werden.

Der für die erfindungsgemäße Schätzung der Verzögerungszeiten verwendete Synchronisationskanal ist bei Mobilfunksystemen mit dem Codemultiplex-Verfahren immer vorhanden. Da über den Synchronisationskanal bekannte Sequenzen übertragen werden, eignet sich dieser Kanal für das Schätzen der Verzögerungsparameter. Dabei kann gleichzeitig eine Synchronisation eines Mobilfunkempfängers erfolgen.

Bevorzugt erfolgt Schätzen der Verzögerungsparameter des Mobilfunkanals in Schritt a) mittels eines Korrelationsverfahrens, das dabei die Korrelationseigenschaften der über den Synchronisationskanal übertragenen Sequenzen ausnutzt.

Insbesondere entsprechen die übertragenen Sequenzen Gold-Sequenzen. Die Gold-Sequenzen weisen vorteilhafterweise besonders gute Kreuzkorrelationseigeschaften auf und eignen sich daher sehr gut für Mobilfunksysteme mit dem Codemultiplex-Verfahren. In solchen Mobilfunksystemen müßten für.eine optimale Dekodierung in einem Mobilfunkempfänger unkorrelierte Rauschsequenzen, die allerdings technisch nicht realisierbar sind, zur Verfügung stehen. Die Gold-Sequenzen kommen dabei vorteilhafterweise diesen unkorrelierten Rauschsequenzen sehr nahe.

Idealerweise erfolgt das Schätzen der verzögerungsparameter des Mobilfunkanals nach einer Anfangssynchronisation eines Mobilfunkempfangers. Dabei kann das Ergebnis des Schätzens noch genauer ausfallen, da der Mobilfunkempfänger bereits auf die Übertragungsfrequenz eingestellt ist und Signale besser empfängt.

Das Schätzen der Verzogerungsparameter des Mobilfunkanals erfolgt bevorzugt durch eine Auswertung der stärksten Signale unter den empfangenen Signalen. Hierbei wird die Frequenz-Diversitat der übertragenen Signale ausgenutzt. Die übertragenen Signale sind dabei so breitbandig, daß sie sich aufgrund der Frequenz-Diversitat über mehrere Übertragungswege im Mobilfunkanal ausbreiten. Jeder der Ubertragungswege weist dabei eine unterschiedliche Übertragungsfunktion auf. Durch die Berücksichtigung lediglich der stärksten unter den empfangenen Signale verringert sich vorteilhafterweise der Rechenaufwand gegenuber einer Berücksichtigung aller empfangenen Signale.

Insbesondere erfolgt das Schätzen der Gewichtsfaktoren des Mobilfunkanals durch Pilot-Sequenzen, die über einen dritten Mobilfunkanal und einen vierten Mobilfunkanal übertragen werden. Bei W-CDMA Mobilfunksystemen kann als dritter Mobilfunkanal der Broadcast-Control-Channel (BCCH) und als vierter Mobilfunkanal der Dedicated-Physical-Channel (DPCH) benutzt werden.

Das Schätzen der Gewichtsfaktoren des Mobilfunkanals erfolgt vorzugsweise während einer Akquisition. Dabei wird insbesondere ein vorher zur Synchronisation benutzter Spreizkode verwendet.

Alternativ erfolgt das Schätzen der Gewichtsfaktoren des Mobilfunkanals nach dem Verfahren der Pilot-Integration. Ferner kann das Schätzen der Gewichtsfaktoren des Mobilfunkanals mittels eines Phase-Tracking-Algorithmus erfolgen.

Zur Durchführung des Verfahrens ist in einem Mobilfunkempfänger ein RAKE-Empfänger mit adaptiven Fingern vorgesehen, wobei der RAKE-Empfänger über die in Schritt c) ermittelten Gewichtsfaktoren des Mobilfunkanals eingestellt wird.

Weitere Vorteile und Anwendungsmoglichkeiten ergeben sich aus der nachfolgenden Beschreibung eines Ausführungsbeispiels in Verbindung mit der Zeichnung. In der Zeichnung zeigt

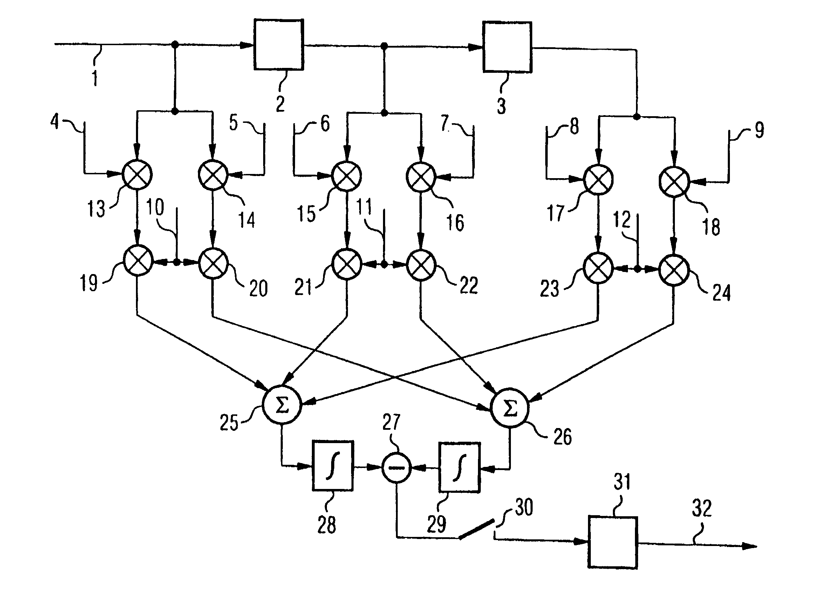

Figur 1 ein Ausführungsbeispiel eines RAKE-Empfängers, der breitbandige Mobilfunksignale empfängt und dekodiert und das erfindungsgemäße Verfahrens ausfuhrt.

Ein Sendesignal $s(t)$ mit der Bandbreite B, die sehr viel größer als die Koharenzbandbreite $B_c$ ist, wird abgetastet und über einen frequenzselektiven Mobilfunkanal übertragen. Das Empfangssignal $e(t)$ lautet dann wie folgt:

$$e(t) = \sum_n h_n(t) \cdot s(t - n/B)$$

Aufgrund der Frequenz-Diversität wird das Sendesignal $s(t)$ über n Ausbreitungspfade übertragen. Die Übertragungsfunktion des n-ten Ausbreitungspfades des Sendesignals ist durch $h_n(t)$ gegeben. Dabei tritt eine Trennung der Ausbreitungspfade mit einer Auflösung 1/B auf, wodurch sich das Empfangssignal $e(t)$ aus einer Folge von n zeitlich im Anstand 1/B eintreffenden Signalkomponenten, die alle dem Sendesignal entsprechen, multipliziert mit der entsprechenden Übertragungsfunktion $h_n(t)$ zusammensetzt.

Zur Ausnutzung der Frequenz-Diversität von breitbandigen Signalen werden RAKE-Empfänger mit signalangepaßten Filtern oder Korrelatoren, Abtasteinheiten und einem Schwellwertentscheider, der das detektierte Signal ausgibt, benutzt. Ein RAKE-Empfanger soll dabei ein Empfangssignal in die einzelnen Signalkomponenten entsprechend den Ausbreitungspfaden trennen und die stärksten Signalkomponenten zu einem Auswertungssignal kombinieren.

In Figur 1 ist ein Ausführungsbeispiel eines solchen RAKE-Empfangers dargestellt.

Ein Empfangssignal 1 wird einer Reihenschaltung eines ersten Verzögerungsgliedes 2 und eines zweiten Verzögerungsgliedes 3 zugeführt, die das Signal um jeweils 1/B Sekunden verzögern.

Das Eingangssignal des ersten und zweiten Verzögerungsgliedes 2 bzw. 3 sowie das Ausgangssignal des zweiten Verzögerungsgliedes 3 wird jeweils einer ersten Filterstruktur 13, 14, 19, 20 bzw. einer zweiten Filterstruktur 15, 16, 21, 22 bzw. einer dritten Filterstruktur 17, 18, 23, 24 zugeführt und gefiltert. Jede der Filterstrukturen gibt jeweils eine erste gefilterte und eine zweite gefilterte Signalkomponente aus.

Die erste und zweite Signalkomponente der ersten, zweiten und dritten Filterstruktur werden einem ersten Summierer 25 bzw. einem zweiten Summierer 26 zugeführt. Das Ausgangssignal des ersten Summierers 25 und des zweiten Summierers 26 wird jeweils mittels eines Integrators 28 bzw. 29 integriert und daraufhin mit einem Subtrahierers 27 voneinander subtrahiert.

Das Ausgangssignal des Subtrahierers 27 wird dann durch einen Abtaster 30 abgetastet und einem Realteil-Berechner 31 zugeführt. Der Realteil-Berechner 31 berechnet den Realteil des zugeführten Signals und führt den Realteil 32 einem Schwellwertentscheider zur Detektion des über den Mobilfunkkanal übertragenen Signals zu.

Die erste, zweite und dritte Filterstruktur sind identisch aufgebaut, so daß im folgenden nur der Aufbau der ersten Filterstruktur beschrieben werden soll.

Das zu filternde Signal wird einem ersten Multiplizierer 13 und einem zweiten Multiplizierer 14 zugeführt. Der erste Multiplizierer 13 und der zweite Multiplizierer 14 multiplizieren das zugeführte Empfangssignal 1 mit orthogonalen Grundimpulsen 4 bzw. 5, die zur Bildung eines binären Impulses dienen. Dadurch werden aus dem zu filternden Signal zwei Signalanteile gebildet.

Anschließend werden die beiden Signalanteile einem dritten Multiplizierer 19 bzw. einem vierten Multiplizierer 20 zugeführt. Beide Multiplizierer 19 und 20 multiplizieren den zugefuhrten Signalanteil mit einer ersten, dem Ausbreitungspfad des zu filternden Signals entsprechenden Übertragungsfunktion 10, die zuvor in einer Kanalabschätzung ermittelt wurde.

In der zweiten Filterstruktur 15, 16, 21 und 22 wird ein zugeführtes Signal ebenfalls mit den orthogonalen Grundimpulsen 6 bzw. 7 und dann mit einer zweiten, dem Ausbreitungspfad des zu filternden Signals entsprechenden Ubertragungsfunktion 11 multipliziert. Entsprechendes gilt für die dritte Filterstruktur 17, 18, 23, 24, wobei mit einer dritten, dem Ausbreitungspfad des zu filternden Signals entsprechenden Übertragungsfunktion 12 multipliziert wird.

Durch die Verzögerung des Empfangssignals mittels mehrerer in Reihe geschalteter Verzögerungsglieder werden die einzelnen Signalkomponenten des Empfangssignals aufgrund der Mehrwegeausbreitung aus dem Empfangssignal herausgesucht. Dabei sollte das Empfangssignal nach Durchlaufen der gesamten Reihe von Verzogerungsgliedern eine dem langsten Ausbreitungspfad entsprechende Verzögerung aufweisen. Die anschließende Multiplikation mit orthogonalen Grundimpulsen sieht die "richtigen" Signalkomponenten, d.h. die Signalkomponenten mit der gleichen Information, aus. Die Multiplikation mit einer dem Ausbreitungspfad der jeweiligen Signalkomponente entsprechenden Übertragungsfunktion $h_n(t)$ entzerrt die entsprechende Signalkomponente. In praktischen Ausführungen des RAKE-Empfängers werden aus Kostengründen nur die stärksten Signalkomponenten des Empfangssignals verarbeitet.

Der RAKE-Empfänger nutzt somit die Frequenz-Diversität eines breitbandigen Empfangssignals, indem aus dem Empfangssignal die Signalkomponenten mit der gleichen Information durch Transversalfilterung gefiltert werden. Dabei muß der RAKE-Empfanger die Parameter des Mobilfunkkanals bzw. der Ausbreitungspfade, insbesondere die Pfadgewichte bzw. Ubertragungsfunktionen, kennen.

Das folgende Verfahren dient zur Schätzung der Parameter und schätzt insbesondere die Ausbreitungspfade mit dem größten Energieanteil, d.h. die die zu ubertragenden Signale am schwachsten dämpfen.

Im W-CDMA und UMTS Mobilfunksystemen wird zur Schätzung ein Synchronisationskanal benutzt, über den laufend Signale gesendet werden. Zudem sind die über den Synchronisationskanal gesendeten Signale aufgrund einer Anfangssynchronisation eines Mobilfunkempfängers bekannt.

Am Anfang eines jeden Slots bzw. Zeitschlitzes des Synchronisationskanals werden sogenannte "Primary Synchronisation Codes" und "Secondary Synchronisation Codes" gesendet, die aufgrund der Anfangssynchronisation dem Empfänger bekannt sind. Die Codes sind dabei mit Gold-Sequenzen gespreizt.

Jeder der W Ausbreitungspfade innerhalb des Synchronisationskanals weist eine eigene Übertragungsfunktion $h_n(t)$ mit n=1, 2, ..., W auf. Durch eine Multiplikation jedes Codes mit jeder Übertragungsfunktion und anschließende Summation erhält man das Empfangssignal:

$$e_i = \sum_{w=1}^{W} m_{i-w+1} \cdot h_w + n_i$$

mit 1 <= i <= $L_m$ + W -1. Die Funktion $n_i$ steht dabei für die Kanalstörungen, die während einer Übertragung auftreten. $L_m$ gibt die Anzahl der Chips der Codes an und ist üblicherweise 256.

Durch Bildung der Korrelationen

$$q_j = \sum_{n=1}^{256} e_{j+n-1} \cdot m_n^* = h_j \cdot \sum_{n=1}^{256} \left| m_n \right|^2 + z_j$$

mit j = 1, 2, ..., 128 und wobei $z_j$ ein Restterm ist, der bei der Abschätzung der Übertragungsfunktionen $h_j$ stört. Dabei hängt der Restterm $z_j$ insbesondere von den Korrelationseigenschaften der Codes ab. Da Gold-Sequenzen bzw. Gold-Codes besonders gute Kreuzkorrelationseigenschaften, wird gerade bei diesen Codes der Restterm vernachlässigbar klein, so daß die Ubertragungsfunktionen $h_j$ aus obiger Gleichung gut abgeschätzt werden können. Diese Abschätzung wird auch als Tau-Schätzung mit Korrelation bezeichnet.

**Patentansprüche**

1. Verfahren zur Schätzung der Kanalimpulsantwort eines Mobilfunkkanals, auf den breitbandig mittels dem Codemultiplex-Verfahren zugegriffen wird, wobei über einen zweiten Mobilfunkkanal, welcher ein Synchronisationskanal ist, fortlaufend Sequenzen zur Synchronisierung eines Mobilfunkempfängers an eine Vielzahl von Mobilfunkempfängern übertragen werden, und wobei diese Sequenzen jedem der Vielzahl von Mobilfunkempfängern bekannt sind, mit den folgenden Schritten:

   a) Schätzen der durch Mehrwegeausbreitung bewirkten Verzögerungsparameter des Mobilfunkkanals,
   b) Einstellen des Mobilfunkempfängers entsprechend der in Schritt a) geschätzten Verzögerungsparameter, und
   c) Schätzen der Gewichtsfaktoren des Mobilfunkkanals mittels Pilot-Sequenzen,

   **dadurch gekennzeichnet, daß** die Mobilfunkempfänger nach einem W-CDMA Standard arbeiten und daß in Schritt a) die Verzögerungsparameter des Mobilfunkkanals an Hand der über den Synchronisationskanal übertragenen Sequenzen geschätzt werden.

2. Verfahren nach Anspruch 1, **dadurch gekennzeichnet, daß** das Schätzen der Verzögerungsparameter des Mobilfunkkanals in Schritt a) mittels eines Korrelationsverfahrens erfolgt.

3. Verfahren nach Anspruch 1 oder 2, **dadurch gekennzeichnet, daß** die übertragenen Sequenzen Gold-Sequenzen entsprechen.

4. Verfahren nach einem der vorhergehenden Ansprüche, **dadurch gekennzeichnet, daß** das Schätzen der Verzögerungsparameter des Mobilfunkkanals nach einer Anfangssynchronisation eines Mobilfunkempfängers erfolgt.

5. Verfahren nach einem der vorhergehenden Ansprüche, **dadurch gekennzeichnet, daß** das Schätzen der Verzögerungsparameter des Mobilfunkkanals durch eine Auswertung der stärksten Signale von den empfangenen Signalen erfolgt.

6. Verfahren nach einem der vorhergehenden Ansprüche, **dadurch gekennzeichnet, daß** das Schätzen der Gewichtsfaktoren des Mobilfunkkanals mittels Pilot-Sequenzen, die über einen dritten Mobilfunkkanal und einen vierten Mobilfunkkanal übertragen werden, erfolgt.

7. Verfahren nach einem der vorhergehenden Ansprüche, **dadurch gekennzeichnet, daß** das Schätzen der Gewichtsfaktoren des Mobilfunkkanals während einer Akquisition erfolgt.

8. Verfahren nach Anspruch 7, **dadurch gekennzeichnet, daß** zu dem Schätzen der Gewichtsfaktoren des Mobilfunkkanals während einer Akquisition ein vorher zur Synchronisation benutzter Spreizkode verwendet wird.

9. Verfahren nach einem der Ansprüche 6 bis 8, **dadurch gekennzeichnet, daß** das Schätzen der Gewichtsfaktoren des Mobilfunkkanals nach dem Verfahren der Pilot-Integration erfolgt.

10. Verfahren nach einem der Ansprüche 6 bis 8, **dadurch gekennzeichnet, daß** das Schätzen der Gewichtsfaktoren des Mobilfunkkanals mittels eines Phase-Tracking-Algorithmus erfolgt.

11. Verfahren nach einem der vorhergehenden Ansprüche **dadurch gekennzeichnet , daß** zur Durchführung des Verfahrens in einem Mobilfunkempfänger ein RAKE-Empfänger mit adaptiven Fingern vorgesehen ist, wobei der RAKE-Empfänger über die in Schritt c) ermittelten Gewichtsfaktoren des Mobilfunkkanals eingestellt wird.

**Claims**

1. Method for estimating the channel impulse response of a mobile radio channel which is accessed over a wide bandwidth by means of the code division multiplex method, in which sequences for synchronizing a mobile radio receiver are continuously transmitted to a multiplicity of mobile radio receivers via a second mobile radio channel which is a synchronization channel and in which these sequences are known to each of the multiplicity of mobile radio receivers, with the following steps:

a) estimating the delay parameters of the mobile radio channel caused by multipath propagation,

b) adjusting the mobile radio receiver in accordance with the delay parameters estimated in step a), and

c) estimating the weighting factors of the mobile radio channel by means of pilot sequences,

**characterized in that** the mobile receivers operate according to a W-CDMA standard and **in that** the delay parameters of the mobile radio channel are estimated in step a) by means of the sequences transmitted via the synchronization channel.

2. The method as claimed in Claim 1, **characterized in that** the estimating of the delay parameters of the mobile radio channel in step a) is carried out by means of a correlation method.

3. The method as claimed in Claim 1 or 2, **characterized in that** the transmitted sequences correspond to gold sequences.

4. The method as claimed in one of the preceding claims, **characterized in that** the estimating of the delay parameters of the mobile radio channel is carried out after an initial synchronization of a mobile radio receiver.

5. The method as claimed in one of the preceding claims, **characterized in that** the estimating of the delay parameters of the mobile radio channel is carried out by evaluating the strongest signals of the received signals.

6. The method as claimed in one of the preceding claims, **characterized in that** the estimating of the weighting factors of the mobile radio channel is carried out by means of pilot sequences which are transmitted via a third mobile radio channel and a fourth mobile radio channel.

7. The method as claimed in one of the preceding claims, **characterized in that** the estimating of the weighting factors of the mobile radio channel is carried out during an acquisition.

8. The method as claimed in Claim 7, **characterized in that** for estimating the weighting factors of the mobile radio channel during an acquisition, a spread-spectrum code previously used for synchronization is used.

9. The method as claimed in one of Claims 6 to 8, **characterized in that** the estimating of the weighting factors of the mobile radio channel is carried out after the method of pilot integration.

10. The method as claimed in one of Claims 6 to 8, **characterized in that** the estimating of the weighting factors of the mobile radio channel is carried out by means of a phase tracking algorithm.

11. The method as claimed in one of the preceding claims, **characterized in that**, to carry out the method, a RAKE receiver with adaptive fingers is provided in a mobile radio receiver, the RAKE receiver being adjusted via the weighting factors of the mobile radio channel as determined in step c).

## Revendications

1. Procédé d'évaluation de la réponse impulsionnelle d'un canal de téléphonie mobile auquel on accède en large bande au moyen d'un procédé de multiplexage de codes dans lequel des séquences destinées à la synchronisation d'un récepteur de téléphonie mobile sont transmises en continu à un grand nombre de récepteurs par un deuxième canal de téléphonie mobile, qui est un canal de synchronisation, et dans lequel ces séquences sont connues de chaque récepteur du grand nombre de récepteurs de téléphonie mobile, ledit procédé comportant les étapes suivantes consistant à :

a) évaluer les paramètres de retard du canal de téléphonie mobile qui sont obtenus par transmission à plusieurs voies,

b) régler le récepteur de téléphonie mobile en fonction des paramètres de retard évalués à l'étape a), et

c) évaluer les facteurs de pondération du canal de téléphonie mobile au moyen de séquences pilotes

**caractérisé en ce que** les récepteurs de téléphonie mobile fonctionnent conformément à une norme W-CDMA et **en ce que** à l'étape a) les paramètres de retard du canal de téléphonie mobile sont évalués grâce aux séquences transmises par le canal de synchronisation.

2. Procédé selon la revendication 1, **caractérisé en ce que** l'évaluation des paramètres de retard du canal de téléphonie mobile est effectuée à l'étape a) à l'aide d'un procédé de corrélation.

3. Procédé selon la revendication 1 ou 2, **caractérisé en ce que** les séquences transmises correspondent à des séquences Gold.

**4.** Procédé selon l'une des revendications précédentes, **caractérisé en ce que** l'évaluation des paramètres de retard du canal de téléphonie mobile est effectuée après une synchronisation initiale d'un récepteur de téléphonie mobile.

**5.** Procédé selon l'une des revendications précédentes, **caractérisé en ce que** l'évaluation des paramètres de retard du canal de téléphonie mobile est effectuée en exploitant les signaux les plus forts parmi les signaux reçus.

**6.** Procédé selon l'une des revendications précédentes, **caractérisé en ce que** l'évaluation des facteurs de pondération du canal de téléphonie mobile est effectuée au moyen de séquences pilotes qui sont transmises sur des troisième et quatrième canaux de téléphonie mobile.

**7.** Procédé selon l'une des revendications précédentes, **caractérisé en ce que** l'évaluation des facteurs de pondération du canal de téléphonie mobile est effectuée pendant une acquisition.

**8.** Procédé selon la revendication 7, **caractérisé en ce que**, pour évaluer les facteurs de pondération du canal de téléphonie mobile pendant une acquisition, on utilise un code d'étalement utilisé auparavant pour la synchronisation.

**9.** Procédé selon l'une des revendications 6 à 8, **caractérisé en ce que** l'évaluation des facteurs de pondération du canal de téléphonie mobile est effectuée conformément au procédé d'intégration des pilotes.

**10.** Procédé selon l'une des revendications 6 à 8, **caractérisé en ce que** l'évaluation des facteurs de pondération du canal de téléphonie mobile est effectuée au moyen d'un algorithme de suivi de phase.

**11.** Procédé selon l'une des revendications précédentes, **caractérisé en ce que**, pour mettre en oeuvre le procédé, il est prévu dans un récepteur de téléphonie mobile un récepteur RAKE comportant des doigts adaptatifs, le récepteur RAKE étant réglé par les facteurs de pondération du canal de téléphonie mobile déterminés à l'étape c).